# EUROPÄISCHE PATENTSCHRIFT

(11) **EP 2 524 193 B1**
(45) Veröffentlichungstag und Bekanntmachung des Hinweises auf die Patenterteilung: **01.04.2020**
(21) Anmeldenummer: 11701197.3
(22) Anmeldetag: 12.01.2011
(51) Int. Cl.: G01D 5/14

(54) **REDUNDANTE ANORDNUNG ZUR BESTIMMUNG DER WINKELLAGE EINES DREHBAR GELAGERTEN TELLS**
REDUNDANT ARRANGEMENT FOR DETERMINING THE ANGULAR POSITION OF A ROTATABLY MOUNTED PART
AGENCEMENT REDONDANTE POUR LA DÉTERMINATION DE L'ANGULARITÉ D'UNE PARTIE PIVOTANTE

(30) Priorität: 15.01.2010 DE 102010004830
(43) Veröffentlichungstag der Anmeldung: 21.11.2012
(73) Patentinhaber: SEW-EURODRIVE GmbH & Co. KG, 76646 Bruchsal (DE)
(72) Erfinder: QUADT, Steffen, 76139 Karlsruhe (DE); MAHLEIN, Jochen, 76139 Karlsruhe (DE)
(74) Vertreter: Tüngler, Eberhard
(86) Internationale Anmeldenummer: PCT/EP2011/000094
(87) Internationale Veröffentlichungsnummer: WO 2011/085968

(56) Entgegenhaltungen:
- DE-A1- 10 123 513
- DE-A1- 10 233 080
- DE-A1- 10 320 057
- DE-A1- 19 840 914
- DE-A1-102005 060 713
- DE-A1-102007 038 298
- DE-U1-202007 010 280
- David Kalinsky: "Architecture of safety-critical systems | Embedded", , 28 August 2005 (2005-08-28), pages 1-9, XP055603788, Retrieved from the Internet: URL:https://www.embedded.com/design/protot yping-and-development/4006464/Architecture -of-safety-critical-systems [retrieved on 2019-07-09]

## Beschreibung

Die Erfindung betrifft eine Anordnung zur Bestimmung der Winkellage eines drehbar gelagerten Teils.
**Aus der** DE 102 33 080 A1 **ist bekannt bei einer Anordnung zur Bestimmung der Winkellage eines drehbar gelagerten Teils zwei identische Sensoren vorzusehen. Aus der** DE 10 2005 060 713 A1 **ist als nächstliegender Stand der Technik bekannt, einen Giant-Magnetic-Resistor und einen Anisotropic-Magnetic Resistor als Sensoren vorzusehen.**
**Aus der** DE 103 20 057 A1 **ist ein redundant ausgeführter Winkelaufnehmer mit Hall-Effekt-Elementen bekannt.**
**Aus der De** 20 2007 010 280 U1 **ist ein Potentiometer bekannt.**
**Aus der** DE 101 23 513 A1 **ist eine elektrische Messtechnik bekannt.**
**Aus der** DE 198 40 914 A1 **ist ein kunststoffgebundener Ringmagnet bekannt.**

**Aus der** DE 10 2007 038 298 A1 **ist ein Drehbewegungssensor zur Erfassung der Drehbewegung einer Welle bekannt.**
Der Erfindung liegt die Aufgabe zugrunde, eine Anordnung zur Winkellagebestimmung weiterzubilden.

Erfindungsgemäß wird die Aufgabe bei der Anordnung zur Bestimmung der Winkellage eines drehbar gelagerten Teils nach den in Anspruch 1 angegebenen Merkmalen gelöst.

Von Vorteil ist dabei, dass im Normalbetrieb die Signale der Sensoren vergleichbar sind und somit eine Fehlfunktion oder ein Versagen eines Sensors detektierbar ist. Außerdem sind bei Ausfall eines Sensors die Signale des anderen zur Winkellagebestimmung verwendbar.

**Erfindungsgemäß** funktionieren erster und zweiter Sensor nach verschiedenen Wirkprinzipien. Von Vorteil ist dabei, dass ein gleichzeitiger Ausfall beider Sensoren unwahrscheinlich ist. Wenn nämlich der Wert einer für einen der Sensoren kritischen physikalischen Größe, beispielsweise Temperatur oder zu niedrige Magnetfeldstärke, überschritten oder unterschritten wird, ist dies mit hoher Wahrscheinlichkeit nicht derselbe Wert oder dieselbe kritische Größe für den anderen Sensor.

**Erfindungsgemäß** ist der erste Sensor ein Kreuzhall-Sensor. Von Vorteil ist dabei, dass eine Bestimmung der Winkellage in einfacher Weise ermöglicht ist.

**Erfindungsgemäß** ist der erste Sensor auf der dem Dauermagneten zugewandten Seite der Leiterplatte angeordnet,
wobei der zweite Sensor auf der dem Dauermagneten abgewandten Seite der Leiterplatte angeordnet ist. Von Vorteil ist dabei, dass somit eine zweiseitige Bestückung der Leiterplatte ein möglichst kompaktes Vorsehen des zweiten und somit die Sicherheit erhöhenden Sensors ermöglicht.

**Erfindungsgemäß** ist der Dauermagnet formschlüssig mit einem mit dem drehbar gelagerten Teil verbundenen Aufnahmeteil oder direkt mit dem drehbar gelagerten Teil verbunden. Von Vorteil ist dabei, dass somit eine mechanisch sichere Verbindung erreichbar ist.

Erfindungsgemäß weist der Dauermagnet eine radial verlaufende Nut und/oder einen radial verlaufenden Schlitz auf, mittels dessen die formschlüssige Verbindung mit dem Aufnahmeteil oder drehbar gelagerten Welle ausgeführt ist. Von Vorteil ist dabei, dass auch auf diese Weise eine mechanische sichere Verbindung erreichbar ist, wobei die Nut einfach und kostengünstig herstellbar ist.
**Erfindungsgemäß** ist der Dauermagnet als quaderförmiger Magnetkörper oder als Rundmagnet ausgeführt. Von Vorteil ist dabei, dass ein einfach herstellbarer Magnetkörper verwendbar ist.
**Erfindungsgemäß** ist mittels der Auswerteschaltung das Versagen oder der fehlerhafte Betrieb eines der Sensoren erkennbar und daraufhin werden nur die Signale eines der Sensoren zur Bestimmung der Winkellage verwendet. Von Vorteil ist dabei, dass eine redundante Anordnung ausgeführt ist und somit die Sicherheit erhöhbar ist, insbesondere ist die Anordnung auch in einer höheren Sicherheitskategorie ausführbar.

Die Erfindung wird nun anhand von Abbildungen näher erläutert:

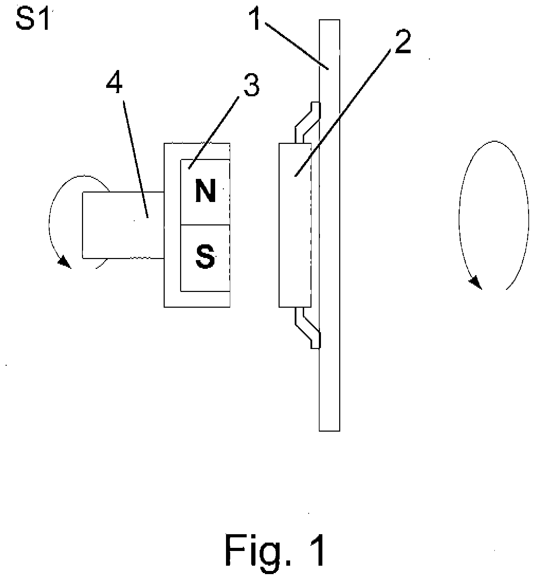

In der Figur 1 bis 6 sind verschiedene erfindungsgemäße Ausführungsbeispiele skizziert.

In Figur 1 ist eine Leiterplatte 1 mit einem Sensor 2 bestückt zur Detektion der Winkellage eines von einem mit einer drehbar gelagerten Welle verbundenen Dauermagnet 3 erzeugten Magnetfeldes. Dabei ist der Dauermagnet 3 in einem Aufnahmeteil 4 vorgesehen, dass mit der Welle formschlüssig und/oder kraftschlüssig verbindbar ist. Vorzugsweise ist der Dauermagnet 3 mit dem Aufnahmeteil 4 stoffschlüssig verbunden, insbesondere verklebt.

Der Sensor 2 ist dabei an der dem Dauermagneten 3 zugewandten Seite der Leiterplatte 1 angeordnet. Beispielhaft ist der Sensor 2 ausführbar als Kreuzhallsensor
Der Dauermagnet 3 ist als Rundmagnet, also vorzugsweise mit zylindrischer Form ausgeführt.

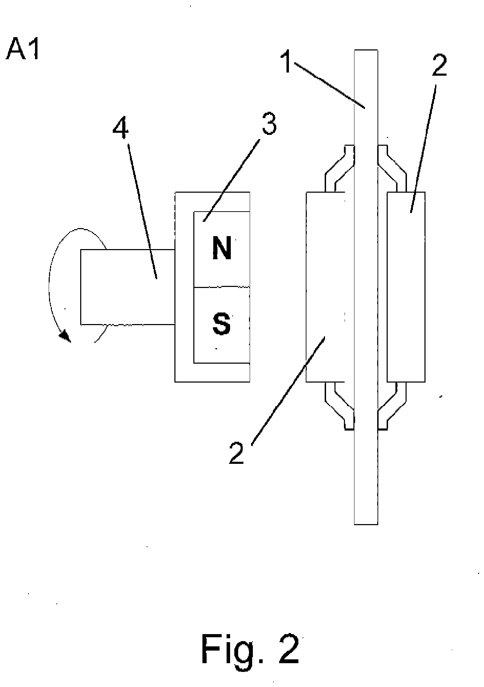

In Figur 2 ist im Unterschied zur Figur 2 ein weiterer Sensor 2 zusätzlich vorgesehen, der auf der vom Dauermagnet 3 abgewandten Seite der Leiterplatte 1 angeordnet ist.

Somit ist bei Ausfall eines der Sensoren 2 ein weiterer verfügbar, um eine Winkelerkennung zu ermöglichen und die Sicherheit ist somit erhöht.

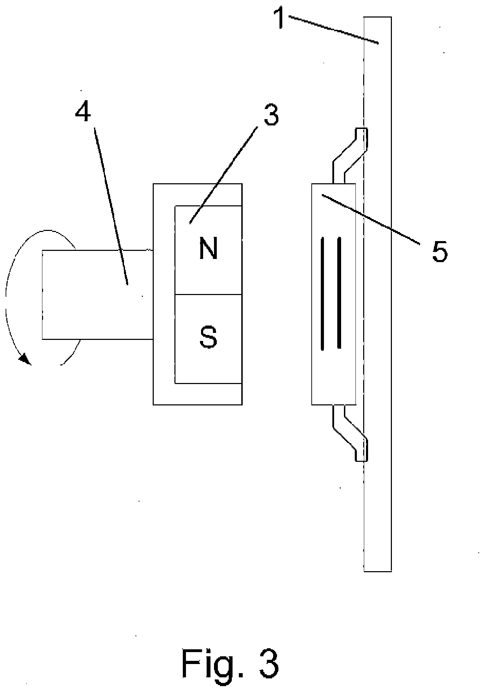

In Figur 3 ist im Unterschied zur Figur 2 der weitere Sensor mit dem ersten Sensor auf der selben Seite der Leiterplatte bestückt und vorzugsweise integriert ausgeführt und somit als Doppelsensor 5 ausgeführt. Auch auf diese Weise ist die Sicherheit erhöhbar.

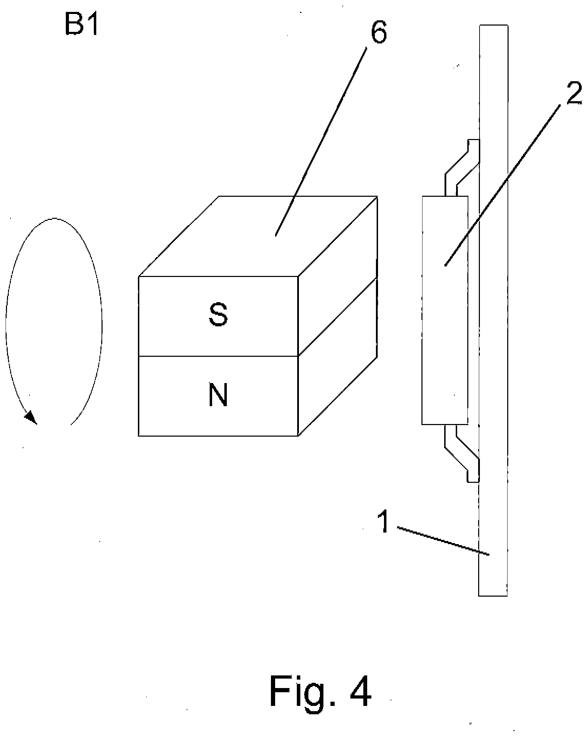

In Figur 4 ist im Unterschied zu den Figuren 1 bis 3 der Dauermagnet 6 statt des Dauermagneten 3 formschlüssig in das mit der Welle verbundene Aufnahmeteil oder in die Welle eingesetzt. Beispielhaft ist der Dauermagnet 6 hierzu quaderförmig ausgeführt und in eine entsprechende Ausnehmung der Welle beziehungsweise des Aufnahmeteils eingesetzt. In der Figur 4 ist der Quader in Schrägansicht gezeigt, also etwas aus seiner wirklichen räumlichen Lage herausgedreht, um seine Form darzustellen. Im realen Ausführungsbeispiel ist er axial ausgerichtet.

Durch den Formschluss ist die Sicherheit der Verbindung zwischen Dauermagnet und Welle verbessert.

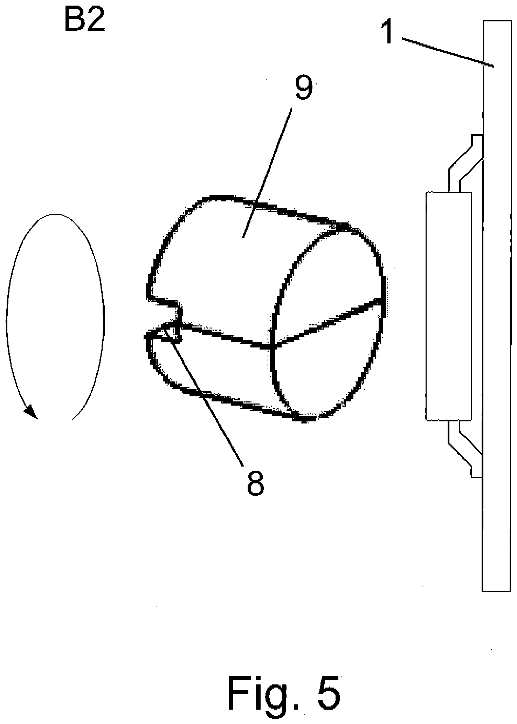

In Figur 5 ist im Unterschied zur Figur 4 der Dauermagnet mit als Rundmagnetkörper 9 ausgeführt, wobei ein radial durchgehender Schlitz oder eine radial durchgehende Nut 8 vorgesehen ist, mit der eine formschlüssige Verbindung mit dem Aufnahmeteil oder der Welle ermöglicht ist. In der Figur 5 ist der Rundmagnetkörper 9 in Schrägansicht gezeigt, also etwas aus seiner wirklichen räumlichen Lage herausgedreht, um seine Form darzustellen. Im realen Ausführungsbeispiel ist er axial ausgerichtet.

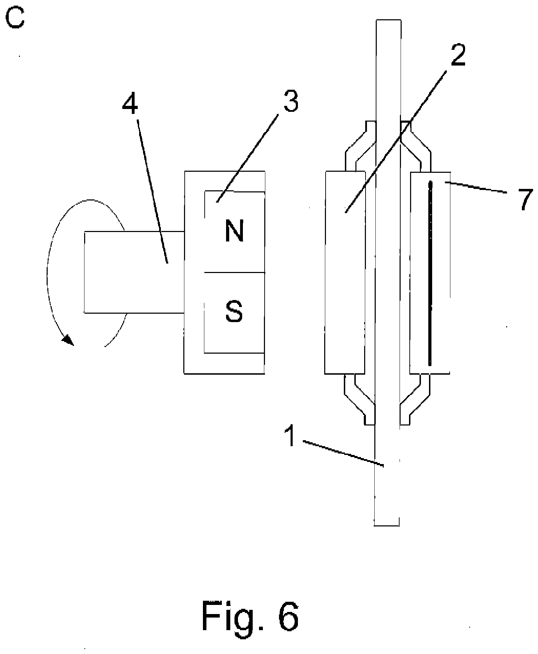

In Figur 6 ist im Unterschied zur Figur 2 zwar ein erster Sensor 2 an der dem Dauermagneten 3 zugewandten Seite der Leiterplatte bestückt. Auf der vom Dauermagneten 3 abgewandten Seite der Leiterplatte 1 ist wiederum ein weiterer Sensor 7 bestückt, der allerdings ein anderes Wirkprinzip als der Sensor 2 aufweist.

Auf diese Weise ist die Sicherheit weiter erhöht. Denn bei einem durch Überschreiten eines kritischen Wertes einer physikalischen Größe bedingten Ausfall eines der Sensoren ist der andere Sensor noch funktionstüchtig. Denn bei verschiedenen Wirkprinzipien sind verschiedenartige physikalische Größen kritisch.

### Bezugszeichenliste

- 1: Leiterplatte
- 2: Sensor
- 3: Dauermagnet
- 4: Aufnahmeteil
- 5: Doppelsensor
- 6: Dauermagnet
- 7: Sensor
- 8: Nut
- 9: Rundmagnetkörper

## Patentansprüche

1. Anordnung zur Bestimmung der Winkellage eines drehbar gelagerten Teils,
wobei am drehbar gelagerten Teil zumindest ein Dauermagnet (3) angeordnet ist,
wobei ein erster Sensor (2) **zur Detektion der Winkellage des Dauermagneten (3)** auf einer ersten Seite einer Leiterplatte (1) angeordnet ist,
**wobei** ein zweiter Sensor (7) **zur Detektion der Winkellage des Dauermagneten (3)** auf der Leiterplatte (1) angeordnet ist,
**wobei erster und zweiter Sensor (2, 7) zur Detektion der Winkellage des Dauermagneten (3) nach verschiedenen Wirkprinzipien funktionieren,** wobei **der erste Sensor (2) auf der dem Dauermagneten (3) zugewandten Seite der Leiterplatte (1) angeordnet ist,**
**wobei der zweite Sensor (7) auf der dem Dauermagneten (3) abgewandten Seite der Leiterplatte (1) angeordnet ist,**
**dadurch gekennzeichnet, dass**
**der erste Sensor (2) ein Kreuzhall-Sensor ist,**
**wobei mittels einer Auswerteschaltung das Versagen oder den fehlerhaften Betrieb eines der Sensoren (2, 7) erkennbar ist und daraufhin nur die Signale eines der Sensoren (2, 7) zur Bestimmung der Winkellage verwendet werden,**
**wobei der Dauermagnet (3) formschlüssig mit einem mit dem drehbar gelagerten Teil verbundenen Aufnahmeteil (4) oder direkt mit dem drehbar gelagerten Teil verbunden ist,**
**wobei der Dauermagnet (3) als quaderförmiger Magnetkörper** oder als Rundmagnet **ausgeführt ist,**
**wobei der Dauermagnet (3) eine radial verlaufende Nut (8) und/oder einen radial verlaufenden Schlitz aufweist, mittels dessen die formschlüssige Verbindung mit dem Aufnahmeteil (4) oder drehbar gelagerten Welle ausgeführt ist.**

## Claims

1. An arrangement for determining the angular position of a rotatably mounted part,
wherein at least one permanent magnet (3) is arranged on the rotatably mounted part, wherein a first sensor (2) for detecting the angular position of the permanent magnet (3) is arranged on a first side of a printed circuit board (1),
wherein a second sensor (7) for detecting the angular position of the permanent magnet (3) is arranged on the printed circuit board (1),
wherein the first and second sensor (2, 7) function to detect the angular position of the permanent magnet (3) according to various principles of operation,
wherein the first sensor (2) is arranged on that side of the printed circuit board (1) which faces the permanent magnet (3),
wherein the second sensor (7) is arranged on that side of the printed circuit board (1) which is remote from the permanent magnet (3),
**characterised in that** the first sensor (2) is a cross Hall-effect sensor,
wherein the failure or the faulty operation of one of the sensors (2, 7) can be recognised by means of an evaluation circuit and thereupon only the signals of one of the sensors (2, 7) are used for determining the angular position,
wherein the permanent magnet (3) is connected in a positively locking manner to a receiving part (4) connected to the rotatably mounted part, or is connected directly to the rotatably mounted part,
wherein the permanent magnet (3) is embodied as a cuboid magnet body or as a round magnet,
wherein the permanent magnet (3) has a radially running groove (8) and/or a radially running slot, by means of which the positive connection to the receiving part (4) or rotatably mounted shaft is carried out.

## Revendications

1. Agencement dévolu à la détermination de la position angulaire d'une pièce montée à rotation,
au moins un aimant permanent (3) étant disposé sur ladite pièce montée à rotation,
un premier capteur (2), affecté à la détection de la position angulaire de l'aimant permanent (3), étant implanté sur un premier côté d'une carte (1) de circuit imprimé,
un second capteur (7), affecté à la détection de la position angulaire dudit aimant permanent (3), étant implanté sur ladite carte (1) de circuit imprimé,
sachant que lesdits premier et second capteurs (2, 7), affectés à la détection de la position angulaire de l'aimant permanent (3), fonctionnent suivant différents principes opérants, ledit premier capteur (2) étant situé du côté de la carte (1) de circuit imprimé qui est tourné vers l'aimant permanent (3),
ledit second capteur (7) étant situé du côté de ladite carte (1) de circuit imprimé qui pointe à l'opposé dudit aimant permanent (3),
**caractérisé par le fait que**
le premier capteur (2) est un capteur à effet Hall croisé,
sachant que la défaillance ou le fonctionnement défectueux de l'un des capteurs (2, 7) peut être identifié(e) au moyen d'un circuit d'évaluation, seuls les signaux de l'un desdits capteurs (2, 7) étant ensuite utilisés pour la détermination de la position angulaire,
l'aimant permanent (3) étant raccordé, par complémentarité de formes, à une partie réceptrice (4) reliée à la pièce montée à rotation, ou bien directement à ladite pièce montée à rotation,
ledit aimant permanent (3) étant réalisé sous la forme d'un corps magnétique parallélépipédique, ou d'un aimant rond,
lequel aimant permanent (3) est pourvu d'une rainure (8) s'étendant radialement et/ou d'une fente s'étendant radialement, au moyen de laquelle est instaurée la liaison, par complémentarité de formes, avec la partie réceptrice (4) ou l'arbre à montage rotatif.
